# EUROPEAN PATENT APPLICATION

(11) **EP 4 804 279 A1**
(43) Date of publication of application: **09.09.2026**
(21) Application number: 24885644.5
(22) Date of filing: 28.10.2024
(51) Int. Cl.: H01M 10/058, H01M 4/505, H01M 4/525, H01M 4/58, H01M 10/0562, H01M 50/202, H01M 50/204

(54) **MANUFACTURING METHOD FOR ALL-SOLID-STATE SECONDARY BATTERY-MOUNTED CIRCUIT BOARD**

(30) Priority: 01.11.2023 JP 2023187801
(71) Applicant: Maxell, Ltd., Kyoto 618-8525 (JP)
(72) Inventor: FURUKAWA, Kazuki, Otokuni-gun, Kyoto 618-8525 (JP); ISHIZAWA, Seiji, Otokuni-gun, Kyoto 618-8525 (JP); KATAYAMA, Takuya, Otokuni-gun, Kyoto 618-8525 (JP); HATAKEYAMA, Atsushi, Otokuni-gun, Kyoto 618-8525 (JP)
(74) Representative: Diehl & Partner
(86) International application number: PCT/JP2024/038283
(87) International publication number: WO 2025/094871

(57) **Abstract**

Provided is a method for manufacturing an all-solid-state secondary battery-mounted circuit board that can maintain good characteristics of the all-solid-state secondary battery. The method for manufacturing an all-solid-state secondary battery-mounted circuit board of the present invention is a method for manufacturing a circuit board on which an all-solid-state secondary battery is mounted, the all-solid-state secondary battery having a power generation element in which a positive electrode layer, a solid electrolyte layer, and a negative electrode layer are stacked in this order, and an exterior body accommodating the power generation element, the positive electrode layer including a sulfide-based solid electrolyte and a positive electrode active material on which a reaction suppressing layer is formed on at least a portion of a surface of the positive electrode active material, the method comprising a step of mounting the all-solid-state secondary battery on a circuit board through reflow soldering, wherein the all-solid-state secondary battery is subjected to the reflow soldering in a state in which a potential of the positive electrode layer is 2.55 V or less relative to the lithium potential.

## Description

### Technical Field

The present invention relates to a method for manufacturing an all-solid-state secondary battery-mounted circuit board that can maintain good characteristics of the all-solid-state secondary battery.

### Background Art

In recent years, with the development of portable electronic devices such as cellular phones and laptop personal computers, the practical use of electric vehicles, and the like, compact and lightweight lithium secondary batteries that have a high capacity and a high energy density have come into use.

Lithium secondary batteries are not only used as the main power source for electronic devices, but applications such as memory backup power sources are also being developed. In such applications, lithium secondary batteries are mounted by soldering or the like on circuit boards on which electronic components are mounted.

When a lithium secondary battery is to be mounted on a circuit board, it is desirable to automatically mount the battery on the circuit board by reflow soldering, considering industrial mass production. However, in this case, the battery passes through a reflow oven set at a very high temperature. Thus, in the case of a lithium secondary battery using an organic electrolyte solution, for example, there is a risk that the battery characteristics will deteriorate due to, in particular, evaporation of the organic electrolyte solution solvent.

On the other hand, all-solid-state secondary batteries, which do not contain an organic electrolyte solution and in which ions are exchanged between a positive electrode layer and a negative electrode layer by a solid electrolyte layer, have higher heat resistance than batteries with an organic electrolyte solution, and are therefore expected to be able to maintain their characteristics better even when mounted on a circuit board through reflow soldering.

Incidentally, it is known that sulfide-based solid electrolytes, which have excellent ionic conductivity, are used as the solid electrolyte in all-solid-state secondary batteries. However, if a sulfide-based solid electrolyte comes into contact with a positive electrode active material, there is a risk that it will be oxidized and a resistive layer will be formed, which will lead to a reduction in ion conductivity in the positive electrode. The problem of a reduction in ion conductivity in the positive electrode due to oxidation of the sulfide-based solid electrolyte is particularly likely to arise when the all-solid-state secondary battery is used at high temperatures.

Meanwhile, technology has also been developed to suppress the deterioration of the characteristics of all-solid-state secondary batteries in high-temperature environments (high temperatures within the temperature range in which the batteries are used) by coating the surface of the positive electrode active material with a coating layer (reaction suppressing layer) for suppressing the reaction between the sulfide-based solid electrolyte and the positive electrode active material, thereby suppressing oxidative decomposition of the sulfide-based solid electrolyte in the positive electrode (Patent Documents 1 and 2, etc.).

Note that regarding sulfide-based solid electrolytes such as Li₆PS₅Cl and Li₃PS₄, Non-Patent Document 1 reports on the potential window.

### Prior Art Documents

### Patent Document

Patent Document 1: JP 2016-207567A
Patent Document 2: JP 2021-141007A

### Non-Patent Document

Non-Patent Document 1: ACS Energy Letters, 2019, vol. 4, pp. 2418-2427

### Disclosure of Invention

### Problem to be Solved by the Invention

In the case of the techniques described in Patent Documents 1 and 2, it is possible to effectively suppress deterioration in characteristics even at relatively high temperatures within the temperature range in which all-solid-state secondary batteries are usually used. However, the inventors of the present invention have revealed through their studies that when such an all-solid-state secondary battery is placed at an extremely high temperature, such as that used in reflow soldering and then used at a high temperature, deterioration in characteristics of the all-solid-state secondary battery due to oxidative decomposition of the sulfide-based solid electrolyte cannot be favorably suppressed.

The present invention has been accomplished in view of the circumstances described above, and it is an object of the present invention to provide a method for manufacturing an all-solid-state secondary battery-mounted circuit board that can maintain good characteristics of the all-solid-state secondary battery.

### Means for Solving Problem

A method for manufacturing an all-solid-state secondary battery-mounted circuit board according to the present invention is a method for manufacturing a circuit board on which an all-solid-state secondary battery is mounted, the all-solid-state secondary battery having a power generation element in which a positive electrode layer, a solid electrolyte layer, and a negative electrode layer are stacked in this order, and an exterior body accommodating the power generation element, the positive electrode layer including a sulfide-based solid electrolyte and a positive electrode active material on which a reaction suppressing layer is formed on at least a portion of a surface of the positive electrode active material, the method comprising a step of mounting the all-solid-state secondary battery on a circuit board through reflow soldering, wherein the all-solid-state secondary battery is subjected to the reflow soldering in a state in which a potential of the positive electrode layer is set to 2.55 V or less relative to a lithium potential.

### Effects of the Invention

According to the present invention, it is possible to provide a method for manufacturing an all-solid-state secondary battery-mounted circuit board that can maintain good characteristics of the all-solid-state secondary battery.

### Brief Description of Drawings

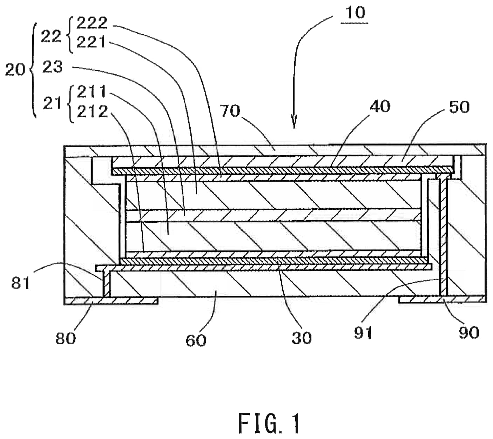

[FIG. 1] FIG. 1 is a cross-sectional view schematically showing an example of an all-solid-state secondary battery that can be used for an all-solid-state secondary battery-mounted circuit board according to the present invention.

### Description of the Invention

The method for manufacturing an all-solid-state secondary battery-mounted circuit board according to the present invention includes a step of mounting an all-solid-state secondary battery on a circuit board through reflow soldering, the all-solid-state secondary battery having a power generation element in which a positive electrode layer, a solid electrolyte layer, and a negative electrode layer are stacked in this order, and an exterior body accommodating the power generation element, the positive electrode layer including a sulfide-based solid electrolyte and a positive electrode active material on which a reaction suppressing layer is formed on at least a portion of a surface of the positive electrode active material. Also, with the manufacturing method according to the present invention, in the step, the all-solid-state secondary battery is subjected to reflow soldering in a state in which the potential of the positive electrode layer is 2.55 V or less relative to the lithium potential.

As described above, the reaction suppressing layer formed on the surface of the positive electrode active material functions to suppress oxidative decomposition of the sulfide-based solid electrolyte due to the reaction between the sulfide-based solid electrolyte and the positive electrode active material, thereby maintaining good characteristics of the all-solid-state secondary battery during use, and the like. Incidentally, when an all-solid-state secondary battery is subjected to extremely high temperatures, such as those used in reflow soldering, the sulfide-based solid electrolyte undergoes oxidative decomposition, particularly within the positive electrode layer. The product (sulfur) of this oxidative decomposition deteriorates the reaction suppressing layer on the surface of the positive electrode active material. Therefore, when the all-solid-state secondary battery (a circuit board on which the all-solid-state secondary battery is mounted) is subsequently used at high temperatures (at relatively high temperatures within the temperature range in which the circuit board is usually used), the deterioration of the battery characteristics progresses at an accelerated rate.

As a result of intensive research, the inventors of the present invention have found that the oxidative decomposition of the sulfide-based solid electrolyte in the positive electrode layer under extremely high temperatures such as those employed in reflow soldering is related to the potential window of the sulfide-based solid electrolyte, and that the oxidative decomposition occurs when the potential of the positive electrode layer relative to the lithium potential exceeds the upper limit of the potential window of the sulfide-based solid electrolyte. Thus, the inventors of the present invention have completed the present invention by providing a circuit board on which all-solid-state secondary batteries are mounted, which are subjected to reflow soldering for mounting the batteries on the circuit board, and can maintain good characteristics even when used at high temperatures. This is achieved by setting the potential of the positive electrode layer relative to the lithium potential to a predetermined value or less, thereby suppressing the oxidative decomposition of the sulfide-based solid electrolyte and reducing the deterioration of the reaction suppressing layer on the surface of the positive electrode active material.

In the all-solid-state secondary battery to be subjected to reflow soldering, the potential of the positive electrode layer is set to 2.55 V or less relative to the lithium potential. This makes it possible to suppress oxidative decomposition of the sulfide-based solid electrolyte in the positive electrode layer during reflow soldering, and to suppress deterioration of the reaction suppressing layer on the surface of the positive electrode active material.

When the potential of the positive electrode layer is set to 2.55 V or less relative to the lithium potential, even when part of the sulfide-based solid electrolyte is oxidatively decomposed in the positive electrode layer during reflow soldering, the resulting product may still have the function as a sulfide-based solid electrolyte, and therefore, deterioration of the characteristics of the all-solid-state secondary battery can also be suppressed. For example, when Li₆PS₅Cl is used for the sulfide-based solid electrolyte in the positive electrode layer of an all-solid-state secondary battery, even when some of the Li₆PS₅Cl is oxidatively decomposed when reflow soldering is performed with the potential of the positive electrode layer adjusted to 2.55 V or less relative to the lithium potential, the decomposition products will include Li₃PS₄, which is a type of sulfide-based solid electrolyte, and the oxidative decomposition of Li₃PS₄ is sufficiently suppressed under the reflow soldering conditions described above, and thus good characteristics of the all-solid-state secondary battery will be maintained.

In addition, it is preferable that the potential of the positive electrode layer of the all-solid-state secondary battery to be subjected to reflow soldering is adjusted to 2.40 V or less relative to the lithium potential. In this case, the oxidative decomposition of the sulfide-based solid electrolyte in the positive electrode layer during reflow soldering can be more effectively suppressed (e.g., when Li₆PS₅Cl is used for the sulfide-based solid electrolyte in the positive electrode layer of the all-solid-state secondary battery, the oxidative decomposition of Li₆PS₅Cl is extremely highly suppressed even after reflow soldering), which makes it possible to more effectively suppress deterioration of the reaction suppressing layer on the surface of the positive electrode active material.

Although the lower limit of the potential of the positive electrode layer of the all-solid-state secondary battery to be subjected to reflow soldering relative to the lithium potential is not particularly limited, the lower limit is usually 1.3 V.

In the all-solid-state secondary battery to be subjected to reflow soldering, the potential of the positive electrode layer relative to the lithium potential is determined as follows (the potential of the positive electrode layer relative to the lithium potential described in the "Examples" below is a value determined using this method). An all-solid-state secondary battery produced with the same specifications is disassembled to take out the power-generating element, and a three-electrode model cell is assembled using a lithium metal foil as the reference electrode, and the battery voltage of the all-solid-state secondary battery (the voltage of the power generation element) and the positive electrode potential relative to the lithium potential are measured. By repeating similar measurements for multiple all-solid-state secondary batteries with different battery voltages and creating a data table in which the battery voltage corresponds to the positive electrode potential, it becomes possible to estimate the positive electrode potential of a certain all-solid-state secondary battery (the battery used for mounting on a circuit board) by measuring the battery voltage of that all-solid-state secondary battery.

In an all-solid-state secondary battery having a positive electrode terminal that is electrically connected to the positive electrode layer and has a portion exposed from the inside of the exterior body to the outside thereof, and a negative electrode terminal that is electrically connected to the negative electrode layer and has a portion exposed from the inside of the exterior body to the outside thereof, it is possible to adopt a method in which the potential of the positive electrode layer can be adjusted to the above-mentioned value by, for example, bringing a single conductive sheet into intimate contact with the positive electrode terminal and the negative electrode terminal of the all-solid-state secondary battery, thereby subjecting the all-solid-state secondary battery to discharge treatment. This method is simple and allows the discharge treatment for multiple all-solid-state secondary batteries to be performed simultaneously using a single conductive sheet, thereby making it possible to increase the productivity of all-solid-state secondary battery-mounted circuit boards.

A conductive rubber sheet is preferable as the conductive sheet for subjecting the all-solid-state secondary battery to discharge treatment. A rubber sheet is more flexible than a resin sheet, a metal sheet, and the like, which usually have a high hardness, and therefore can inhibit scratches when the positive electrode terminal and the negative electrode terminal of the all-solid-state secondary battery are brought into intimate contact with the sheet, and can also bring the positive electrode terminal and the negative electrode terminal into favorable contact with the sheet even when their height positions do not match.

Examples of conductive rubber sheets include those obtained by mixing various rubbers with carbon black or metal powder, but conductive silicone rubber sheets made from silicone rubber are preferable because of their excellent heat resistance. Also, for the reasons mentioned above, the hardness (Shore A) is preferably 60° to 65°. Furthermore, when the volume resistivity is in a range of 1 to 10 Ω•cm (for a sheet with a thickness of 1 mm), the discharge treatment can be performed on multiple all-solid-state secondary batteries without variation.

The discharge treatment for adjusting the potential of the positive electrode layer of the all-solid-state secondary battery is preferably performed at a temperature of 40°C or higher and 80°C or lower. A high temperature is desirable because the higher the temperature, the better the conductivity of the solid electrolyte and the shorter the time it takes to discharge. However, when the temperature rises too high, there is a risk of battery deterioration and it may also have an effect on production equipment such as discharge trays, and thus it is desirable to keep the temperature within this range.

In addition, it is more preferable that the all-solid-state secondary battery to be subjected to reflow soldering is adjusted such that the open circuit voltage is 1.0 V or less.

When an all-solid-state secondary battery is mounted on a circuit board through reflow soldering, if the battery is exposed to an extremely high temperature, a current greater than the current value according to the specifications of the battery at room temperature may flow through the circuit, which may adversely affect electronic components mounted on the circuit board. However, when the all-solid-state secondary battery satisfies the above-mentioned open circuit voltage, a large current does not flow in the circuit even when it is subjected to extremely high temperatures during reflow soldering, and therefore deterioration of electronic components mounted on the circuit board can be suppressed.

In addition, in order to adjust the open circuit voltage of a secondary battery having an organic electrolyte solution to 1.0 V or less, for example, the battery may be overdischarged. However, in this case, deterioration of the battery may progress, and the defective rate during the production of all-solid-state secondary battery-mounted circuit boards may increase, resulting in a decrease in productivity. However, in the case of an all-solid-state secondary battery that does not contain an organic electrolyte solution and that exchanges ions between the positive electrode layer and the negative electrode layer via a solid electrolyte layer, even when the open circuit voltage is adjusted to 1.0 V or less by, for example, putting the battery in an overdischarge state, deterioration to an extent that problems would arise in use will not occur. Therefore, when mounting the all-solid-state secondary battery on the circuit board, it is possible to effectively suppress deterioration of the all-solid-state secondary battery and the electronic components mounted on the circuit board, and further reduce the occurrence of defective circuit boards to be manufactured, thereby ensuring higher productivity.

The open circuit voltage of the all-solid-state secondary battery to be subjected to reflow soldering for mounting the battery on a circuit board is preferably 1.0 V or less, more preferably 0.9 V or less, even more preferably 0.6 V or less, and may be 0 V. The all-solid-state secondary battery that satisfies the open circuit voltage may be one that is in an overdischarge state. To bring an all-solid-state secondary battery into an overdischarge state, various discharge treatment methods can be used, as will be described later, but the open circuit voltage obtained in a practical treatment time is usually 0.05 V or higher, and in many cases 0.1 V or higher.

The open circuit voltage of an all-solid-state secondary battery in this specification refers to the voltage of the all-solid-state secondary battery measured after the all-solid-state secondary battery is charged or discharged and 72 hours have passed in an open circuit state in an environment of 23°C after the completion of charging or discharging.

In this specification, the "overdischarge state" of an all-solid-state secondary battery refers to a state in which the voltage in an open circuit state is lower than the open circuit voltage after rated discharge has been completed. Specifically, when the fully charged state of an all-solid-state secondary battery is defined as SOC (state of charge) = 100%, this refers to a state in which an all-solid-state secondary battery with SOC = S% has been subjected to rated discharge for (5×S/100) hours at a current value of 0.2 C, or a state in which an equivalent amount of electricity has been discharged (SOC = 0%) and then a certain amount of electricity has been further discharged. That is, this refers to a state in which the voltage falls below the lower limit of the normal usage range of the all-solid-state secondary battery (SOC: 100% to 0%) and the battery is further discharged.

To bring the all-solid-state secondary battery into an overdischarge state, constant voltage discharge may be performed at a voltage (V_{L}) lower than the open circuit voltage when the SOC is 0%, until the current value attenuates to the end-of-discharge current of, for example, 0.005 C or less, or until a predetermined end time. After discharging is complete, the polarization inside the all-solid-state secondary battery gradually relaxes, causing the voltage to rise, and the open circuit voltage after 72 hours becomes higher than V_{L}. However, by adjusting the values of V_{L} and the end-of-discharge current, it is possible to obtain an all-solid-state secondary battery in an overdischarge state with a desired open circuit voltage. There are various other possible methods, and for example, an overdischarge state with a desired open circuit voltage can be achieved by connecting a resistor of 10 to 1000 Ω and maintaining a voltage of 0 V for several minutes to several tens of hours.

When the all-solid-state secondary battery is in an overdischarge state, the potential of the positive electrode layer is usually lower than or equal to the above-mentioned value relative to the lithium potential, and therefore the battery can be subjected to reflow soldering.

### <All-Solid-State Secondary Battery>

The all-solid-state secondary battery used in the manufacturing method according to the present invention has a power generation element in which a positive electrode layer, a solid electrolyte layer, and a negative electrode layer are stacked in this order, and an exterior body that accommodates the power generation element.

FIG. 1 shows a cross-sectional view schematically showing an example of an all-solid-state secondary battery. An all-solid-state secondary battery 10 shown in FIG. 1 has a power generation element 20 having a positive electrode layer 21, a negative electrode layer 22, and a solid electrolyte layer 23 interposed therebetween, and this power generation element 20 is enclosed in an exterior body formed by an exterior container 60 and a lid 70.

A lower surface of the exterior container 60 in FIG. 1 includes external terminals 80 and 90 for electrically connecting the all-solid-state secondary battery 10 to the circuit of the circuit board. Also, the external terminal 80 is electrically connected to the positive electrode layer 21 of the power generation element 20 through a conductive path 81, and serves as a positive electrode terminal. Also, the external terminal 90 is electrically connected to the negative electrode layer 22 of the power generation element 20 through a lead 40 and a conductive path 91, and serves as a negative electrode terminal.

The positive electrode layer 21 constituting the power generation element 20 has a positive electrode mixture layer (a molded body made of a positive electrode mixture) 211 and a current collector 212. The negative electrode layer 22 constituting the power generation element 20 has a negative electrode mixture layer (a molded body made of a negative electrode mixture) 221 and a current collector 222.

A conductive sheet (such as a metal foil or foamed metal porous body) 30 is disposed on the surface of the current collector 212 of the positive electrode layer 21 (the surface opposite to the positive electrode mixture layer 211). The positive electrode layer 21 is electrically connected to the conductive sheet 30 due to the positive electrode layer coming into contact with the current collector 212, and the conductive sheet 30 is electrically connected to the conductive path 81.

In the all-solid-state secondary battery 10 shown in FIG. 1, a spacer 50 is disposed between the lead 40 and the lid 70, and has the effect of pressing the power generation element 20 toward the conductive sheet 30. The effect of this spacer 50 improves the electrical connection between the lead 40 and the negative electrode layer 22 and between the lead 40 and the conductive path 91, the electrical connection between the positive electrode layer 21 and the conductive sheet 30, and the electrical connection between the conductive sheet 30 and the conductive path 81. The spacer 50 may be made of a rubber plate, a metal spring (such as a leaf spring), or the like.

### (Positive Electrode)

The positive electrode layer of the all-solid-state secondary battery can be formed, for example, by molding a positive electrode mixture containing a positive electrode active material and the like.

There are no particular limitations on the positive electrode active material, as long as it is a positive electrode active material used in conventionally known non-aqueous electrolyte secondary batteries, that is, an active material capable of absorbing and releasing Li ions. Specific examples of the positive electrode active material include a lithium transition metal composite oxide containing at least one element selected from the group consisting of Mn, Co, and Ni as a transition metal; and an olivine-type lithium transition metal oxide containing at least one element selected from the group consisting of Fe, Mn, and Co as a transition metal. More specifically, examples thereof include spinel-type lithium manganese composite oxides represented by LiMᵣMn₂₋ᵣO₄ (where M is at least one element selected from the group consisting of Li, Na, K, B, Mg, Ca, Sr, Ba, Ti, V, Cr, Zr, Fe, Co, Ni, Cu, Zn, Al, Sn, Sb, In, Nb, Ta, Mo, W, Y, Ru, and Rh, and r satisfies 0 ≤ r ≤ 1), layered compounds represented by LiᵣMn₍₁₋ₛ₋ᵣ₎NiₛMₜO₍₂₋ᵤ₎Fᵥ (where M is at least one element selected from the group consisting of Co, Mg, Al, B, Ti, V, Cr, Fe, Cu, Zn, Zr, Mo, Sn, Ca, Sr, and W, and r, s, t, u, and v satisfy 0.8 ≤ r ≤ 1.2, 0 < s < 0.5, 0 ≤ t ≤ 0.5, u + v < 1, -0.1 ≤ u ≤ 0.2, and 0 ≤ v ≤ 0.1), lithium cobalt composite oxides represented by LiCo₁₋ᵣMᵣO₂ (where M is at least one element selected from the group consisting of Al, Mg, Ti, V, Cr, Zr, Fe, Ni, Cu, Zn, Ga, Ge, Nb, Mo, Sn, Sb, and Ba, and r satisfies 0 ≤ r ≤ 0.5), lithium nickel composite oxides represented by LiNi₁₋ᵣMᵣO₂ (where M is at least one element selected from the group consisting of Al, Mg, Ti, Zr, Fe, Co, Cu, Zn, Ga, Ge, Nb, Mo, Sn, Sb, and Ba, and r satisfies 0 ≤ r ≤ 0.5), and olivine-type composite oxides represented by Li₁₊ₛM₁₋ᵣNᵣPO₄Fₛ (where M is at least one element selected from the group consisting of Fe, Mn, and Co, N is at least one element selected from the group consisting of Al, Mg, Ti, Zr, Ni, Cu, Zn, Ga, Ge, Nb, Mo, Sn, Sb, V, and Ba, and r and s satisfy 0 ≤ r ≤ 0.5, 0 ≤ s ≤ 1). It is also possible to use, as the positive electrode active material, pyrophosphate compounds represented by Li₂M₁₋ᵣNᵣP₂O₇ (where M is at least one element selected from the group consisting of Fe, Mn, and Co, N is at least one element selected from the group consisting of Al, Mg, Ti, Zr, Ni, Cu, Zn, Ga, Ge, Nb, Mo, Sn, Sb, V, and Ba, and r satisfies 0 ≤ r ≤ 0.5). As the positive electrode active material, only one of these may be used, or two or more of them may be used in combination.

From the viewpoint of reducing side reactions that cause battery capacity deterioration and increasing the density of the positive electrode, the average particle size of the positive electrode active material is preferably 0.1 µm or more, and more preferably 0.5 µm or more, and is preferably 25 µm or less, and more preferably 10 µm or less. Note that the positive electrode active material may be primary particles or secondary particles obtained through aggregation of primary particles. When the positive electrode layer contains a solid electrolyte, using a positive electrode active material with an average particle size in the above range allows for a large interface with the solid electrolyte, thereby further improving load characteristics of the battery.

The average particle size of the positive electrode active material and the average particle size of other particles (such as the solid electrolyte) in this specification refer to a 50% diameter value (D₅₀) in a volume-based cumulative fraction when an integral volume is obtained in order from the smallest particle size using a particles size distribution measurement apparatus (Microtrac "HRA 9320" available from Nikkiso Co., Ltd., or the like).

The positive electrode active material has, on at least a portion of its surface, a reaction suppressing layer for suppressing a reaction between the positive electrode active material and the sulfide-based solid electrolyte contained in the positive electrode layer.

The reaction suppressing layer is only required to be made of a material that has ion conductivity and can suppress a reaction between the positive electrode active material and the sulfide-based solid electrolyte. As a material that can constitute the reaction suppressing layer, an oxide that contains, for example, Li and at least one element selected from the group consisting of Nb, P, B, Si, Ge, Ti, Zr, Ta, and W can be used. More specific examples include an Nb-containing oxide such as LiNbO₃, as well as Li₃PO₄, Li₃BO₃, Li₄SiO₄, Li₄GeO₄, LiTiO₃, LiZrO₃, Li₂WO₄, and the like. The reaction suppressing layer may contain only one of these oxides, two or more of these oxides, or a composite compound formed by two or more of these oxides. Among these oxides, it is preferable to use an Nb-containing oxide, and more preferably LiNbO₃.

The reaction suppressing layer is present on at least a portion of the surface of the positive electrode active material, and more specifically, it is preferably present on the surface in an amount of 0.1 to 2.0 parts by mass per 100 parts by mass of the positive electrode active material. When the amount of the reaction suppressing layer is within this range, it is possible to favorably suppress a reaction between the positive electrode active material and the solid electrolyte.

Examples of a method for forming the reaction suppressing layer on the surface of the positive electrode active material include a sol-gel method, a mechano-fusion method, a CVD method, a PVD method, an ALD method, and the like.

The content percentage of the positive electrode active material in the positive electrode mixture constituting the positive electrode layer is preferably 20% by mass to 95% by mass.

Examples of the conductive assistant in the positive electrode layer include: carbon materials such as carbon black (such as thermal black, furnace black, channel black, ketjen black, or acetylene black), graphite (natural graphite, artificial graphite), graphene, vapor-grown carbon fibers, carbon nanofibers, and carbon nanotubes; and powder and porous bodies made of simple substances or alloys of Cu, Ni, Al, Au, and Pd. These may be used alone or in combination of two or more. The content percentage of the conductive assistant in the positive electrode layer is preferably 0.1% by mass to 15% by mass.

A sulfide-based solid electrolyte is added to the positive electrode layer. Examples of the sulfide-based solid electrolytes include particles of Li₂S-P₂S₅-based glass, Li₂S-SiS₂-based glass, Li₂S-P₂S₅-GeS₂-based glass, Li₂S-B₂S₃-based glass or the like. In addition, it is possible to use thio-LISICON-type glass (Li_{12-12a-b+c+6d-e}M¹_{3+a-b-c-d}M²_{b}M³_{c}M⁴_{d}M⁵₁₂₋ₑXₑ (where M¹ represents Si, Ge, or Sn, M² represents P or V, M³ represents Al, Ga, Y, or Sb, M⁴ represents Zn, Ca, or Ba, M⁵ represents S or any one of S and O, X represents F, Cl, Br, or I, and a, b, c, d, and e satisfy 0 ≤ a < 3, 0 ≤ b + c + d ≤ 3, and 0 ≤ e ≤ 3), such as Li₁₀GeP₂S₁₂ and Li_{9.54}Si_{1.74}P_{1.44}S_{11.7}Cl_{0.3}), and argyrodite-type glass (Li₇₋ₖPS₆₋ₖXₖ (where X represents one or more halogen elements, and k satisfies 0.2 < k < 2.0) such as Li₆PS₅Cl, Li_{7-x+y}PS₆₋ₓCl_{x+y} (where x and y satisfy 0.05 ≤ y ≤ 0.9, -3.0x + 1.8 ≤ y ≤ -3.0x + 5.7), Li₇₋ₕPS₆₋ₕClᵢBrⱼ (where h, i, and j satisfy h = i + j, 0 < h ≤ 1.8, 0.1 ≤ i/j ≤ 10.0)), which have attracted attention in recent years due to their high lithium-ion conductivity.

Among these sulfide-based solid electrolytes, sulfide-based solid electrolytes containing Li and P are more preferable, and argyrodite-type sulfide-based solid electrolytes, which have particularly high Li ion conductivity and high chemical stability, are even more preferable.

The positive electrode layer may contain other solid electrolytes in addition to the sulfide-based solid electrolyte. The other solid electrolyte that can be used together with the sulfide-based solid electrolyte is not particularly limited as long as it has Li-ion conductivity, and for example, a hydride-based solid electrolyte, a halide-based solid electrolyte, an oxide-based solid electrolyte, and the like can be used.

Examples of the hydride-based solid electrolytes include LiBH₄, and solid solutions of LiBH₄ and a following alkali metal compound (e.g., solid solutions in which the mole ratio between LiBH₄ and the alkali metal compound is 1:1 to 20:1). As the alkali metal compound used in the above-mentioned solid solution, at least one selected from the group consisting of lithium halides (such as LiI, LiBr, LiF, and LiCl), rubidium halides (such as RbI, RbBr, RbF, and RbCl), cesium halides (such as CsI, CsBr, CsF, and CsCl), lithium amides, rubidium amides, and cesium amides can be used.

Examples of the halide-based solid electrolyte include monoclinic LiAlCl₄, defect spinel or layered LiInBr₄, and monoclinic Li₆₋₃ₘYₘX₆ (where m satisfies 0 < m < 2, and X = Cl or Br). It is also possible to use known solid electrolytes disclosed in WO 2020/070958 and WO 2020/070955.

Examples of the oxide-based solid electrolytes include Li₂O-Al₂O₃-SiO₂-P₂O₅-TiO₂-based glass ceramic material, Li₂O-Al₂O₃-SiO₂₋P₂O₅-GeO₂-based glass ceramic material, garnet-type Li₇La₃Zr₂O₁₂, NASICON-type Li_{1+O}Al_{1+O}Ti_{2-O}(PO₄)₃ and Li₁₊ₚAl₁₊ₚGe₂₋ₚ(PO₄)₃, and perovskite-type Li_{3q}La_{2/3-q}TiO₃, and the like.

When a sulfide-based solid electrolyte is used in combination with another solid electrolyte, the proportion of the sulfide-based solid electrolyte is preferably 20% by mass or more when the total amount of the solid electrolytes in the positive electrode mixture constituting the positive electrode layer is 100% by mass. The solid electrolyte contained in the positive electrode layer may entirely be a sulfide-based solid electrolyte. Therefore, the upper limit of the proportion of the sulfide-based solid electrolyte is 100% by mass when the total amount of the solid electrolyte in the positive electrode mixture constituting the positive electrode layer is 100% by mass.

The content percentage of the solid electrolyte in the positive electrode mixture constituting the positive electrode layer is preferably 4% by mass to 80% by mass.

The positive electrode layer may contain a binder. However, since the positive electrode layer contains a sulfide-based solid electrolyte that has the effect of enhancing its moldability, the binder need not be contained when good moldability can be ensured without using a binder.

Examples of the binder added to the positive electrode layer include fluororesins such as polyvinylidene fluoride (PVDF).

When a binder is required in the positive electrode mixture that constitutes the positive electrode layer, the binder content percentage is preferably 15% by mass or less, and preferably 0.5% by mass or more. On the other hand, when the positive electrode mixture constituting the positive electrode layer does not require a binder from the viewpoint of moldability, the binder content percentage is preferably 0.5% by mass or less, more preferably 0.3% by mass or less, and even more preferably 0% by mass (i.e., no binder is added).

The positive electrode layer may have a current collector. It is possible to use, as the current collector for the positive electrode layer, a foil made of metal such as aluminum or stainless steel; sheet-like conductive porous substrates such as a punched metal, a mesh, an expanded metal, and a foamed metal of aluminum or stainless steel, and the like; carbon sheets; and the like. As a sheet-like conductive porous substrate, it is preferable to use a foamed metal porous body. A specific example of the foamed metal porous body is "Celmet (registered trademark)" manufactured by Sumitomo Electric Industries, Ltd.

The positive electrode layer can be formed by, for example, compressing a positive electrode mixture prepared by mixing a positive electrode active material, a conductive assistant, and a solid electrolyte, and a binder and the like, which are added as needed, through compression molding or the like.

In the case of a positive electrode layer having a current collector, it can be formed by, for example, press-bonding the current collector onto a compression molded body of the positive electrode mixture obtained as described above.

The thickness of the positive electrode layer is usually 50 µm or more, but from the viewpoint of achieving a high capacity battery, preferably 200 µm or more. Also, the thickness of the positive electrode layer is usually 2000 µm or less.

The current collector for the positive electrode layer preferably has a thickness of 0.01 to 0.1 mm.

### (Negative Electrode Layer)

The negative electrode layer of the all-solid-state secondary battery can be formed by, for example, molding a negative electrode mixture containing a negative electrode active material and the like.

For example, one of, or a mixture of two or more of, carbon materials capable of absorbing and releasing lithium, such as graphite, pyrolytic carbon, coke, glassy carbon, fired products obtained by firing organic polymer compounds, mesophase carbon microbeads (MCMB), and carbon fibers is used as the negative electrode active material. Simple substances, compounds, and alloys that include an element such as Si, Sn, Ge, Bi, Sb, or In; compounds that enable charging and discharging at a voltage as low as that in the case of lithium metal, such as lithium-containing nitrides or lithium-containing oxides; lithium metal; and lithium/aluminum alloys can also be used as the negative electrode active material. For example, the negative electrode active material used may be one of or a mixture of two or more of, lithium titanium oxides such as Li₄Ti₅O₁₂, metal oxides such as TiO₂, NbO_{2.5-δ} (0 ≤ δ ≤ 0.5), MoO_{3-δ} (0 ≤ δ ≤ 1), WO_{3-δ} (0 ≤ δ ≤ 1), and TiNb₂O₇; or metal sulfides such as WS₂ and MoS₂.

In particular, it is preferable to use lithium titanium oxide. The lithium titanium oxide may be represented by the following general formula (1).

Li[Li_{1/3-c}M¹_{c}Ti_{5/3-d}M²_{d}]O₄ (1)

In the general formula (1), M¹ is at least one element selected from the group consisting of Na, Mg, K, Ca, Sr, and Ba, M² is at least one element selected from the group consisting of Al, V, Cr, Fe, Co, Ni, Zn, Ym, Zr, Nb, Mo, Ta, and W, and c and d satisfy 0 ≤ c < 1/3 and 0 ≤ d < 5/3.

That is, in the lithium titanium oxide represented by the general formula (1), a portion of Li sites may be substituted with the element M¹. However, in the general formula (1), c, which represents a ratio of the element M¹, is preferably less than 1/3. In the lithium titanium oxide represented by the general formula (1), Li does not have to be substituted with the element M¹, and therefore c, which represents the ratio of the element M¹, may be 0.

In the lithium titanium oxide represented by the general formula (1), the element M² is a component for enhancing the electronic conductivity of the lithium titanium oxide. When d, which represents the ratio of the element M², is in a range of 0 < d < 5/3, the effect of enhancing the electronic conductivity can be favorably ensured. The lithium titanium oxide represented by the general formula (1) does not necessarily contain the element M², and therefore d, which represents the ratio of the element M², may be 0.

Only lithium titanium oxide may be used as the negative electrode active material, but when lithium titanium oxide and other negative electrode active materials are used, the proportion of the negative electrode active materials other than lithium titanium oxide in the total amount of the negative electrode active materials is preferably 30% by mass or less.

The content percentage of the negative electrode active material in the negative electrode mixture constituting the negative electrode layer is preferably 50% by mass to 95% by mass.

It is possible to add a solid electrolyte to the negative electrode layer. As the solid electrolyte added to the negative electrode layer, it is possible to use one or more of the sulfide-based solid electrolytes, hydride-based solid electrolytes, halide-based solid electrolytes, and oxide-based solid electrolytes, which are listed above as examples of the solid electrolyte that can be added to the positive electrode layer. Among the solid electrolytes listed above as examples, it is more preferable to use sulfide-based solid electrolytes, and it is even more preferable to use an argyrodite-type sulfide-based solid electrolyte, because they have high Li-ion conductivity and also functions for improving the negative electrode layer.

The content percentage of the solid electrolyte in the negative electrode mixture constituting the negative electrode layer is preferably 4% by mass to 70% by mass.

It is possible to add a conductive assistant to the negative electrode layer. Specific examples thereof include carbon materials such as graphite (natural graphite, artificial graphite), graphene, carbon black, vapor-grown carbon fibers, carbon nanofibers, and carbon nanotubes. The content percentage of the conductive assistant in the negative electrode layer is preferably 1% by mass to 10% by mass.

The negative electrode layer may or may not contain a binder. Specific examples thereof include binders that are the same as those listed above to be added to the positive electrode layer. Note that, for example, in a case where favorable moldability can be ensured when the negative electrode layer is formed without using a binder as in the case where a sulfide-based solid electrolyte is added to the negative electrode layer, a binder does not need to be added to the negative electrode layer.

When a binder is required in the negative electrode mixture that constitutes the negative electrode layer, the binder content percentage is preferably 15% by mass or less, and preferably 0.5% by mass or more. On the other hand, in a case where favorable moldability can be obtained without adding a binder to the negative electrode mixture that constitutes the negative electrode layer, the binder content percentage is preferably 0.5% by mass or less, more preferably 0.3% by mass or less, and even more preferably 0% by mass (i.e., no binder is added).

The negative electrode layer may have a current collector. It is possible to use, as a current collector for a negative electrode layer, a sheet-like conductive porous substrate such as a foil, a punched metal, a mesh, an expanded metal, and a foamed metal that are made copper or nickel; a carbon sheet; or the like. As a sheet-like conductive porous substrate, it is preferable to use a foamed metal porous body. A specific example of the foamed metal porous body is "Celmet (registered trademark)" manufactured by Sumitomo Electric Industries, Ltd.

The negative electrode layer can be formed by, for example, compressing a negative electrode mixture prepared by mixing a negative electrode active material, a conductive assistant, and a solid electrolyte, and a binder and the like, which are added as needed, through compression molding or the like.

In the case of a negative electrode layer having a current collector, it can be formed by, for example, press-bonding the current collector onto a compression molded body of the negative electrode mixture obtained as described above.

The thickness of the negative electrode layer is usually 100 µm or more, but from the viewpoint of achieving a high capacity battery, preferably 200 µm or more. Also, the thickness of the negative electrode layer is usually 3000 µm or less.

The current collector for the negative electrode layer preferably has a thickness of 0.01 to 0.1 mm.

### (Solid Electrolyte Layer)

As the solid electrolyte layer in the all-solid-state secondary battery, it is possible to use one or more of the various types of sulfide-based solid electrolytes, hydride-based solid electrolytes, halide-based solid electrolytes, and oxide-based solid electrolytes listed above as examples of the solid electrolyte that can be added to the positive electrode layer. Among the solid electrolytes listed above as examples, it is more preferable to use a sulfide-based solid electrolyte, and even more preferable to use an argyrodite-type sulfide-based solid electrolyte, in order to achieve better battery characteristics.

The solid electrolyte layer can be formed using any of the following methods: a method of compressing a solid electrolyte through compression molding or the like; a method of applying a solid electrolyte layer-forming composition prepared by dispersing a solid electrolyte in a solvent onto a substrate, the positive electrode layer, or the negative electrode layer, drying the composition, and performing compression molding such as pressing as needed; and the like.

The solid electrolyte layer may also include a porous body such as a resin nonwoven fabric as a support.

As the solvent used in the solid electrolyte layer-forming composition, it is preferable to select a solvent that is less likely to deteriorate the solid electrolyte. In particular, a sulfide-based solid electrolyte and a hydride-based solid electrolyte cause a chemical reaction with a minute amount of water, and it is therefore preferable to use a nonpolar aprotic solvent as typified by a hydrocarbon solvent such as hexane, heptane, octane, nonane, decane, decalin, toluene, or xylene. In particular, it is more preferable to use a super dehydrated solvent with a water content of 0.001% by mass (10 ppm) or less. It is also possible to use a fluorine-based solvent such as "Vertrel (registered trademark)" manufactured by Du Pont-Mitsui Fluorochemicals Co., Ltd., "Zeorora (registered trademark)" manufactured by Zeon Corporation Japan, and "Novec (registered trademark)" manufactured by Sumitomo 3M Ltd., and a non-aqueous organic solvent such as dichloromethane or diethyl ether.

The thickness of the solid electrolyte layer is preferably 10 to 500 µm.

### (Power Generation Element)

The power generation element is formed by stacking the positive electrode layer, the solid electrolyte layer, and the negative electrode layer in this order. In order to obtain the power generation element, for example, it is possible to use a method in which a positive electrode layer (or a negative electrode layer) is formed through compression molding in advance, and then a solid electrolyte layer and a negative electrode layer (or a positive electrode layer) are formed using this layer as a substrate, or a method in which a positive electrode layer is formed through compression molding on one side of a solid electrolyte layer formed through compression molding in advance, and a negative electrode layer is formed on the other side of the solid electrolyte layer.

There are no particular restrictions on the shape of the power generation element in plan view, and it can be circular, elliptical, or a polygon such as a square.

### (Exterior Body)

For the exterior body of the all-solid-state secondary battery, it is possible to use: a battery container having an exterior container and a lid as shown in FIG. 1; a flat-shaped (such as coin-type or button-type) battery container having a metal exterior can and a metal sealing can; and the like. As an exterior body for surface mounting through reflow soldering, it is possible to use a container in which the external terminals are provided on the same surface of the exterior body, as shown in FIG. 1.

In the case of a battery container having an exterior container and a lid as shown in FIG. 1, the exterior container can be made of a ceramic material or resin. Also, it is possible to use a lid made of a ceramic material, resin, or metal (an iron-based alloy such as an iron-nickel alloy or an iron-nickel-cobalt alloy, or the like). In the exterior container, the external terminal and the conductive path that connects an electrode according to an electrode stacked body and the external terminal can be made of metal such as manganese, cobalt, nickel, copper, molybdenum, silver, palladium, tungsten, platinum, or gold, or an alloy containing such a metal, or the like.

The exterior container and the lid can be sealed by bonding them together with an adhesive, or when a metal lid is used, the lid side of a side wall of a recess of the exterior container may be made of metal (an iron-based alloy such as an iron-nickel alloy or an iron-nickel-cobalt alloy, or the like) and then sealed by welding the exterior container and the lid together, or brazing them with an alloy such as gold-tin (Au-Sn) alloy.

Furthermore, when both the exterior container and the lid are made of a ceramic material, they can also be sealed through welding with low-melting-point glass.

### <Circuit Board>

There are no particular limitations on the circuit board on which the all-solid-state secondary battery is mounted. It is possible to use a circuit board obtained by performing wiring and solder paste printing, using a known method, on a known board on which various members can be mounted through reflow soldering.

### <Manufacturing of All-Solid-State Secondary Battery-Mounted Circuit Board>

The all-solid-state secondary battery is mounted on the circuit board through reflow soldering. Specifically, a circuit board on which an all-solid-state secondary battery is placed at an intended mounting position is heated using a reflow oven, and the all-solid-state secondary battery is soldered to the circuit board to manufacture an all-solid-state secondary battery-mounted circuit board.

### Examples

Hereinafter, the present invention will be described in detail based on examples. However, the examples given below do not limit the scope of the present invention.

### (Example 1)

### <Production of All-Solid-State Secondary Battery>

A negative electrode mixture was prepared by mixing lithium titanate (Li₄Ti₅O₁₂, negative electrode active material) with an average particle size of 2 µm, a sulfide-based solid electrolyte (Li₆PS₅Cl) with an average particle size of 0.7 µm, and graphene (conductive assistant) in a mass ratio of 50:41:9.

A positive electrode mixture was prepared by mixing LiCoO₂ (positive electrode active material) with an average particle size of 5 µm, a sulfide-based solid electrolyte (Li₆PS₅Cl) with an average particle size of 0.7 µm, and graphene in a mass ratio of 65:30.7:4.3, a LiNbO₃ coating layer being formed on the surface of LiCoO₂.

Then, a temporarily molded layer for the solid electrolyte layer was formed by placing a sulfide-based solid electrolyte (Li₆PS₅Cl) powder with an average particle size of 0.7 µm in a powder molding die, and performing compression molding at a surface pressure of 70 MPa using a pressing machine. Further, the negative electrode mixture was placed on an upper face of the temporarily molded layer for the solid electrolyte layer and subjected to compression molding at a surface pressure of 50 MPa, and then a temporarily molded layer for the negative electrode was further formed on the temporarily molded layer for the solid electrolyte layer.

Then, a nickel foamed metal porous body [Nickel "Celmet" (registered trademark)] from Sumitomo Electric Industries, Ltd., cut to a diameter of 7.25 mm (thickness: 1.2 mm, porosity: 98%), was placed on the temporarily molded layer of the negative electrode formed on the temporarily molded layer of the solid electrolyte layer. Compression molding was then performed at a surface pressure of 300 MPa to form an integrated product of the solid electrolyte layer and the negative electrode layer.

Further, the die was turned upside down, the positive electrode mixture was placed on the upper face (the surface opposite to the surface having the negative electrode) of the solid electrolyte layer in the die, and subjected to compression molding at a surface pressure of 50 MPa, and thus a temporarily molded layer for the positive electrode was formed on the solid electrolyte layer.

Then, a nickel foamed metal porous body, which was the same as that used for the negative electrode, was cut, and the resulting foamed metal porous body was placed on the temporarily molded layer for the positive electrode formed on the solid electrolyte layer, and subjected to compression molding at a surface pressure of 1400 MPa, to form an electrode stacked body.

In the obtained electrode stacked body, the thickness of the negative electrode mixture layer of the negative electrode layer, the thickness of the porous metal substrate, and the thickness of a portion of the porous metal substrate embedded in the negative electrode mixture layer were respectively 1250 µm, 50 µm (4% of the thickness of the porous metal substrate before use in the negative electrode), and 10 µm (20% of the total thickness of the porous metal substrate). Also, the area percentage of part of the negative electrode mixture exposed on the surface of the negative electrode layer was 7%.

In the obtained electrode stacked body, the thickness of the positive electrode mixture layer of the positive electrode layer, the thickness of the porous metal substrate, and the thickness of a portion of the porous metal substrate embedded in the positive electrode mixture layer were respectively 900 µm, 50 µm (4% of the thickness of the porous metal substrate before use in the positive electrode), and 10 µm (20% of the total thickness of the porous metal substrate). Also, the area percentage of part of the positive electrode mixture exposed on the surface of the positive electrode layer was 7%.

A nickel foamed metal porous body, which was the same as those used for the positive electrode layer and the negative electrode layer, was cut to a diameter of 7.25 mm, and the resulting foamed metal porous body was placed on the inner bottom face of a recessed container (the depth of ceramic material was 2.5 mm) that had a cross-sectional structure similar to that shown in FIG. 1, was made of a ceramic material, and had a seal ring made of an iron-nickel-cobalt alloy disposed on an upper portion of the side wall, and the electrode stacked body was placed thereon with the positive electrode layer facing downward. A lead (Ni foil) was placed on top of the negative electrode layer of the electrode stacked body, and a rubber sheet (spacer) with a thickness of 400 µm was placed thereon. Subsequently, a lid made of an iron-nickel-cobalt alloy was placed on the side wall of the recess in the exterior container, and the lid and the exterior container were welded together while compressing the rubber sheet in the thickness direction, thereby sealing the exterior body constituted by the exterior container and the lid to obtain an all-solid-state secondary battery. In the resulting all-solid-state secondary battery, the rubber sheet serving as the spacer was compressed in the thickness direction, causing the electrode stacked body to press the porous body metal layer, which was constituted by the foamed metal porous body. The thickness of the porous body metal layer in the all-solid-state secondary battery was 200 µm.

This all-solid-state secondary battery was subjected to constant current charging at a current value of 1.6 mA to a voltage of 2.6 V, then constant voltage charging at a voltage of 2.6 V to a current value of 0.05 mA, and thereafter constant current discharging at a current value of 1.6 mA to a voltage of 1.0 V. The discharge capacity at this time was approximately 8 mAh.

Then, this all-solid-state secondary battery was subjected to constant current discharging at a current value of 0.8 mA to a voltage of 0.0 V, and then constant voltage discharging at a voltage of 0.0 V to a current value of 0.01 mA. After 72 hours, the open circuit voltage was measured and found to be 0.58 V. Also, the potential of the positive electrode layer at that time was 2.13 V relative to the lithium potential.

### <Mounting of All-Solid-State Secondary Battery on Circuit Board for Experiment>

Next, solder paste was applied to a circuit board for experiment with a bridge (short circuit between terminals due to solder) formation rate of 20±5%. An electronic component (component with a temperature resistance of 260°C) and the all-solid-state secondary battery were placed thereon and placed in a reflow oven. The electronic component and the all-solid-state battery were soldered to a circuit board under the temperature profile conditions described below, where the surface temperature of an upper center of the all-solid-state battery was as follows, thereby producing an all-solid-state secondary battery-mounted circuit board. Note that lead-free solder (Sn-3.0Ag-0.5Cu) was used for the soldering.

### (Temperature Profile Conditions for Soldering in Reflow Oven)

·Preheating: 165°C×90s
·Main heating: 230°C or higher (peak temperature 250°C)×30s

### (Example 2)

An all-solid-state secondary battery was produced in the same manner as in Example 1, except that the voltage in the final discharge process was changed to 0.2 V. When 72 hours had passed after discharging, the open-circuit voltage of this all-solid-state secondary battery was 0.82 V, and the potential of the positive electrode layer was 2.37 V relative to the lithium potential. An all-solid-state secondary battery-mounted circuit board was produced in the same manner as in Example 1, except that this all-solid-state secondary battery was used.

### (Example 3)

An all-solid-state secondary battery was produced in the same manner as in Example 1, except that the voltage in the final discharge process was changed to 0.35 V. When 72 hours had passed after discharging, the open-circuit voltage of this all-solid-state secondary battery was 0.96 V, and the potential of the positive electrode layer was 2.51 V relative to the lithium potential. An all-solid-state secondary battery-mounted circuit board was produced in the same manner as in Example 1, except that this all-solid-state secondary battery was used.

### (Example 4)

An all-solid-state secondary battery was produced in the same manner as in Example 1, except that the final discharging process was modified such that a conductive rubber sheet (conductive silicone rubber sheet manufactured by Kyowa Kogyo Co., Ltd., model number: KSR60069, hardness Shore A: 62°, volume resistivity: 5 Ω•cm, thickness: 1mm) was brought into intimate contact with the positive electrode terminal and the negative electrode terminal and the battery was kept discharged at 60°C for 2 hours. When 72 hours had passed after discharging, the open-circuit voltage of this all-solid-state secondary battery was 0.30 V, and the potential of the positive electrode layer was 1.85 V relative to the lithium potential. An all-solid-state secondary battery-mounted circuit board was produced in the same manner as in Example 1, except that this all-solid-state secondary battery was used.

### (Example 5)

An all-solid-state secondary battery was produced in the same manner as in Example 1, except that the end-of-discharge current in the final discharging process was changed to 0.00 mA and the end time was changed to 48 hours. When 72 hours had passed after discharging, the open-circuit voltage of this all-solid-state secondary battery was 0.13 V, and the potential of the positive electrode layer was 1.68 V relative to the lithium potential. An all-solid-state secondary battery-mounted circuit board was produced in the same manner as in Example 1, except that this all-solid-state secondary battery was used.

### (Comparative Example 1)

An all-solid-state secondary battery was produced in the same manner as in Example 1, except that the voltage in the final discharge process was changed to 0.45 V. When 72 hours had passed after discharging, the open-circuit voltage of this all-solid-state secondary battery was 1.14 V, and the potential of the positive electrode layer was 2.69 V relative to the lithium potential. An all-solid-state secondary battery-mounted circuit board was produced in the same manner as in Example 1, except that this all-solid-state secondary battery was used.

### (Comparative Example 2)

An all-solid-state secondary battery was produced in the same manner as in Example 1, except that the voltage in the final discharge process was changed to 0.6 V. When 72 hours had passed after discharging, the open-circuit voltage of this all-solid-state secondary battery was 1.29 V, and the potential of the positive electrode layer was 2.84 V relative to the lithium potential. An all-solid-state secondary battery-mounted circuit board was produced in the same manner as in Example 1, except that this all-solid-state secondary battery was used.

### (Comparative Example 3)

An all-solid-state secondary battery was produced in the same manner as in Example 1, except that the voltage in the final discharge process was changed to 0.75 V. When 72 hours had passed after discharging, the open-circuit voltage of this all-solid-state secondary battery was 1.73 V, and the potential of the positive electrode layer was 3.28 V relative to the lithium potential. An all-solid-state secondary battery-mounted circuit board was produced in the same manner as in Example 1, except that this all-solid-state secondary battery was used.

### (Comparative Example 4)

An all-solid-state secondary battery was produced in the same manner as in Example 1, except that the voltage in the final discharge process was changed to 1.0 V. When 72 hours had passed after discharging, the open-circuit voltage of this all-solid-state secondary battery was 2.22 V, and the potential of the positive electrode layer was 3.77 V relative to the lithium potential. An all-solid-state secondary battery-mounted circuit board was produced in the same manner as in Example 1, except that this all-solid-state secondary battery was used.

### (Reference Example)

An all-solid-state secondary battery was produced in the same manner as in Example 1, except that the final discharging process was not performed. When the battery was charged under the same conditions as those for the initial charging/discharging before the battery was mounted on the circuit board performed on the battery of Example 1, the open-circuit voltage of this all-solid-state secondary battery was 2.31 V, and the potential of the positive electrode layer was 3.81 V relative to the lithium potential.

The following evaluations were performed on the all-solid-state secondary battery-mounted circuit boards of the examples and comparative examples. The all-solid-state secondary battery-mounted circuit boards of the examples and comparative examples were taken out from the reflow oven and cooled to 23°C. Thereafter, the all-solid-state secondary batteries on the circuit boards were charged and discharged under the same conditions as those for the initial charging/discharging before the batteries were mounted on the circuit boards, and the discharge capacity (capacity after passing through the reflow oven) was measured. Also, the battery of the reference example was charged and discharged under the same conditions as those for the batteries on the circuit boards of the examples and the like, and the discharge capacity (reference example capacity) was measured. Then, the capacity after passing through the reflow oven in each of the batteries on the circuit boards of the examples and comparative examples was evaluated by dividing the capacity after passing through reflow oven by the reference example capacity and expressing the obtained capacity in percentage.

After the capacity of each battery on the circuit board after passing through the reflow oven was measured, the battery was charged under the same conditions as those for the initial charging/discharging before the battery was mounted on the circuit board, and then each circuit board was stored in a thermostatic chamber at 115°C for 50 days. Then, each circuit board taken out from the thermostatic chamber was cooled to 23°C. The battery on the circuit board was then charged under the same conditions as those for the initial charging/discharging before the battery is mounted on the circuit board, and the impedance of each battery (storage-recharge impedance) was measured. Then, the battery was discharged under the same conditions as those for the initial charging/discharging before the battery was mounted on the circuit board, and the discharge capacity (recovery capacity after storage and recharge) of each battery was measured. Note that the impedance after storage and recharge of the battery on each circuit board of the examples and comparative examples was evaluated by dividing the impedance by the impedance measured after charging under the same conditions as those for the batteries on the circuit boards of the examples and the like, and expressing the obtained impedance in percentage. Then, the recovery capacity after storage and recharge of each of the batteries on the circuit boards of the examples and comparative examples was evaluated by dividing the capacity by the reference example capacity and expressing the obtained capacity in percentage. Here, the impedance of each battery was determined by measuring the AC impedance at 1kHz with an applied voltage of 10 mV.

These results, along with the states of the all-solid-state secondary batteries at the stage of being mounted on the circuit boards, are shown in Table 1. The "potential of the positive electrode layer" of the all-solid-state secondary batteries shown in Table 1 is based on the lithium potential.

**[Table 1]**

| | State of All-Solid-State Secondary Battery Before being Mounted on Circuit Board | | Capacity after Passing through Reflow Oven (%) | Recovery Capacity after Storage and Recharge (%) | Impedance after Storage and Recharge (%) |
|---|---|---|---|---|---|
| | Potential of Positive Electrode Layer (V) | Open Circuit Voltage (V) | | | |
| Ex. 1 | 2.13 | 0.58 | 102 | 77 | 227 |
| Ex. 2 | 2.37 | 0.82 | 102 | 72 | 240 |
| Ex. 3 | 2.51 | 0.96 | 103 | 67 | 275 |
| Ex. 4 | 1.85 | 0.30 | 102 | 79 | 215 |
| Ex. 5 | 1.68 | 0.13 | 102 | 80 | 210 |
| Comp. Ex. 1 | 2.69 | 1.14 | 102 | 62 | 274 |
| Comp. Ex. 2 | 2.84 | 1.29 | 102 | 61 | 286 |
| Comp. Ex. 3 | 3.28 | 1.73 | 102 | 57 | 308 |
| Comp. Ex. 4 | 3.77 | 2.22 | 102 | 60 | 336 |

As shown in Table 1, the all-solid-state batteries according to the all-solid-state secondary-mounted circuit boards of Examples 1 to 5, which were manufactured using all-solid-state secondary batteries in which the potential of the positive electrode layer was adjusted to a suitable value relative to the lithium potential, exhibited a relatively large discharge capacity (recovery capacity) even after being stored at high temperatures of 115°C, compared to the batteries according to the circuit boards of Comparative Examples 1 to 4, which were manufactured using batteries with an unsuitable potential. Furthermore, the increase in impedance was relatively suppressed, and the battery characteristics after high-temperature storage were well maintained even after the batteries were mounted on the circuit boards through reflow soldering. As described above, this result suggests that in the batteries on the circuit boards of Examples 1 to 5, the deterioration of the reaction suppressing layer on the surface of the positive electrode active material was suppressed, and even during subsequent high-temperature storage, the oxidative decomposition of the sulfide-based solid electrolyte due to reaction with the positive electrode active material within the positive electrode layer was well suppressed.

The invention may be embodied in other forms without departing from the essential characteristics thereof. The embodiments disclosed in this application are to be considered in all respects as illustrative and not limiting. The scope of the present invention should be construed in view of the appended claims, rather than the foregoing description, and all changes that come within the meaning and range of equivalency of the claims are intended to be embraced therein.

### Industrial Applicability

The all-solid-state secondary battery-mounted circuit board obtained using the manufacturing method according to the present invention can be applied as a constituent member of various electronic devices and the like, similar to conventionally known circuit boards on which electronic components are mounted.

### Description of Reference Numerals

- 10: All-solid-state secondary battery
- 20: Power generation element
- 21: Positive electrode layer
- 211: Positive electrode mixture layer (molded body made of positive electrode mixture)
- 212: Current collector
- 22: Negative electrode layer
- 221: Negative electrode mixture layer (molded body made of negative electrode mixture)
- 222: Current collector
- 23: Solid electrolyte layer
- 30: Conductive sheet
- 40: Lead
- 50: Spacer
- 80, 90: External terminal
- 81, 91: Conductive path

## Claims

1. A method for manufacturing an all-solid-state secondary battery-mounted circuit board on which an all-solid-state secondary battery is mounted, the all-solid-state secondary battery having a power generation element in which a positive electrode layer, a solid electrolyte layer, and a negative electrode layer are stacked in this order, and an exterior body accommodating the power generation element, the positive electrode layer including a sulfide-based solid electrolyte and a positive electrode active material on which a reaction suppressing layer is formed on at least a portion of a surface of the positive electrode active material, the method comprising:
a step of mounting the all-solid-state secondary battery on a circuit board through reflow soldering,
wherein the all-solid-state secondary battery is subjected to the reflow soldering in a state in which a potential of the positive electrode layer is 2.55 V or less relative to a lithium potential.

2. The method for manufacturing an all-solid-state secondary battery-mounted circuit board according to claim 1,
wherein the all-solid-state secondary battery is subjected to reflow soldering in a state in which the potential of the positive electrode layer is 2.40 V or less relative to the lithium potential.

3. The method for manufacturing an all-solid-state secondary battery-mounted circuit board according to claim 1,
wherein the all-solid-state secondary battery has a positive electrode terminal that is electrically connected to the positive electrode layer and has a portion exposed from an inside of the exterior body to an outside of the exterior body, and a negative electrode terminal that is electrically connected to the negative electrode layer and has a portion exposed from the inside of the exterior body to the outside thereof, and
the potential of the positive electrode layer is adjusted by performing discharge treatment on the all-solid-state secondary battery by bringing a single conductive sheet into intimate contact with the positive electrode terminal and the negative electrode terminal of the all-solid-state secondary battery before the all-solid-state secondary battery is subjected to the reflow soldering.

4. The method for manufacturing an all-solid-state secondary battery-mounted circuit board according to claim 3,
wherein the discharge treatment for a plurality of the all-solid-state secondary batteries is performed simultaneously using the single conductive sheet.

5. The method for manufacturing an all-solid-state secondary battery-mounted circuit board according to claim 3,
wherein the conductive sheet is a conductive rubber sheet.

6. The method for manufacturing an all-solid-state secondary battery-mounted circuit board according to claim 3,
wherein a temperature during the discharge treatment performed on the all-solid-state secondary battery is 40°C to 80°C.

7. The method for manufacturing an all-solid-state secondary battery-mounted circuit board according to claim 1,
wherein the all-solid-state secondary battery, in which the positive electrode layer contains, as the positive electrode active material, a lithium transition metal composite oxide containing at least one element selected from the group consisting of Mn, Co, and Ni as a transition metal, is subjected to the reflow soldering.

8. The method for manufacturing an all-solid-state secondary battery-mounted circuit board according to claim 1,
wherein the all-solid-state secondary battery, in which the positive electrode layer contains, as the positive electrode active material, an olivine-type lithium transition metal oxide containing at least one element selected from the group consisting of Fe, Mn, and Co as a transition metal, is subjected to the reflow soldering.
